# EUROPEAN PATENT APPLICATION

(11) **EP 3 730 237 A1**
(43) Date of publication of application: **28.10.2020**
(21) Application number: 18891799.1
(22) Date of filing: 18.12.2018
(51) Int. Cl.: B22F 9/04, B22F 1/00, C22C 14/00, C22C 21/00, C22C 30/00

(54) **METHOD FOR PRODUCING TIAL INTERMETALLIC COMPOUND POWDER, AND TIAL INTERMETALLIC COMPOUND POWDER**

(30) Priority: 18.12.2017 JP 2017241301
(71) Applicant: Hitachi Metals, Ltd., Minato-ku Tokyo 108-8224 (JP)
(72) Inventor: NAKAMURA Kiyomi, Tokyo 108-8224 (JP); HAN Gang, Tokyo 108-8224 (JP); SAKAMAKI Koichi, Tokyo 108-8224 (JP); SAITO Kazuya, Tokyo 108-8224 (JP)
(74) Representative: Becker, Eberhard
(86) International application number: PCT/JP2018/046501
(87) International publication number: WO 2019/124344

(57) **Abstract**

Provided is a method for producing a TiAl intermetallic compound powder in which it is possible to reduce the number of internal pores. Also provided is a TiAl intermetallic compound powder in which internal pores have been reduced in number. This method for producing a TiAl intermetallic compound powder comprises passing a cut piece of a TiAl intermetallic compound through a hot plasma flame and performing a spheroidizing process. This TiAl intermetallic compound powder has a pore ratio of 0-0.4% by area in a cross-section. The TiAl intermetallic compound powder described above is suitable as a raw powder for use in fabricating a molded article by various powder metallurgy methods and/or layer molding methods.

## Description

### BACKGROUND OF THE INVENTION

### Technical Field

The present invention relates to a method for producing a TiAl intermetallic compound powder and a TiAl intermetallic compound powder.

### Related Art

TiAl intermetallic compounds including TiAl, Ti₃Al, TiAl₃ and the like have a low density and excellent high-temperature strength, and thus the application thereof to structural parts of various devices in the aerospace field, the power generation field, and the like as a useful lightweight and heat-resistant material has been progressed.

However, TiAl intermetallic compounds are a material which exhibits poor ductility and is hard to machine. Hence, when a TiAl intermetallic compound having a predetermined shape is fabricated, a method is realistic in which near net shape of a powder of a TiAl intermetallic compound is achieved by various powder metallurgy methods (for example, sintering, hot isostatic pressing, metal powder injection molding) and layer molding methods (also called 3D printing or additive manufacturing technology). Besides, a method is realistic in which the surface of the near net shaped TiAl intermetallic compound is cut and finished into the final shapes of various parts.

As a method for obtaining the TiAl intermetallic compound powder, there has been proposed a method of "melting an alloy containing a TiAl intermetallic compound as a main component and rapidly solidifying the droplets obtained by the melting to obtain a metal powder" (Patent Literature 1).

### [Literature of related art]

### [Patent literature]

Patent Literature 1: Japanese Patent Laid-Open No. 2008-208432

### SUMMARY

### [Problems to be Solved]

The method described in Patent Literature 1 is an effective method for refining the structure of a TiAl intermetallic compound powder. In the case of a TiAl intermetallic compound powder having a refined structure, the fine structure can be maintained when the TiAl intermetallic compound powder is molded by sintering for example, and thus strength can be imparted to the molded article.

However, there is still room for improvement in the strength of a molded article obtained by the above method. In other words, when there are a large number of pores (voids) inside the TiAl intermetallic compound powder, a considerable number of voids attributed to the pores remain inside the molded article and may deteriorate the mechanical properties and reliability of the molded article.

An objective of the present invention is to provide a method for producing a TiAl intermetallic compound powder, by which pores inside the TiAl intermetallic compound powder can be decreased, and to provide the TiAl intermetallic compound powder.

### [Means to Solve Problems]

The present invention is a method for producing a TiAl intermetallic compound powder in which a cutting chips of a TiAl intermetallic compound is passed through a thermal plasma flame for a spheroidizing treatment. Besides, the method is preferably a method for producing a TiAl intermetallic compound powder which satisfies one or two or more of the following requirements.
- The size of the cutting chips is 500 µm or less.
- The power of the thermal plasma flame is 10 to 250 kW.
- The thermal plasma flame is a radio frequency plasma flame.
- The operating gas of the thermal plasma flame is an inert gas.
- A carrier gas used to supply the c cutting chips to a region of the thermal plasma flame is an inert gas.

In addition, the present invention is a TiAl intermetallic compound powder of which a cross section has a porosity of 0 to 0.4 area%. Besides, the TiAl intermetallic compound powder is preferably a TiAl intermetallic compound powder which satisfies one or two or more of the following requirements.
- The area circularity in a secondary projection image is 0.9 or more for 90% or more of the entire number of powders.
- The particle diameter is 1 to 250 µm as a 50% particle diameter (D50) in the volume-based cumulative particle size distribution.
- The chemical composition has 10% to 80% of Al by a mass percentage, and the rest is Ti and impurities. Besides, one or two elemental species of Nb: 20.0% or less or Cr: 20.0% or less are further contained or one or two or more elemental species of V, Ta, Mn, B, Si, C, W, or Y are contained by 20.0% or less for each.
- The TiAl intermetallic compound powder is used in a powder metallurgy method or a layer molding method.

### [Effect]

According to the present invention, it is possible to decrease pores inside a TiAl intermetallic compound powder.

### BRIEF DESCRIPTION OF THE DRAWINGS

FIG. 1 is a photograph as a substitute for a drawing, which illustrates an example of a cross section of a TiAl intermetallic compound powder of an example of the present invention.
FIG. 2 is a photograph as a substitute for a drawing, which illustrates an example of a cross section of a TiAl intermetallic compound powder of a comparative example.
FIG. 3 is a structural diagram which illustrates an example of a thermal plasma treatment apparatus for performing a spheroidizing treatment related to the present invention.
FIG. 4 is a photograph as a substitute for a drawing, which illustrates an example of the appearance shapes of a cutting chips used in Example 2 and a TiAl intermetallic compound powder fabricated from this cutting chips.
FIG. 5 is an element mapping diagram attained by analyzing Al concentrations in a cutting chips used in Example 2 and a cross section of a TiAl intermetallic compound powder fabricated from this cutting chips using EPMA (electron probe microanalyzer).
FIG. 6 is a photograph as a substitute for a drawing, which illustrates an example of the appearance shapes of a cutting chips used in Example 3 and a TiAl intermetallic compound powder fabricated from this cutting chips.
FIG. 7 is an element mapping diagram attained by analyzing Al concentrations in a cutting chips used in Example 3 and a cross section of a TiAl intermetallic compound powder fabricated from this cutting chips using EPMA.

### DESCRIPTION OF THE EMBODIMENTS

Hereinafter, the respective constitutional requirements of the present invention will be described.
(1) In the method for producing a TiAl intermetallic compound powder of the present invention, a cutting chips of a TiAl intermetallic compound is passed through a thermal plasma flame for a spheroidizing treatment.

Conventionally, TiAl intermetallic compound powders have been produced by a method of "melting an alloy containing a TiAl intermetallic compound as a main component and rapidly solidifying the droplets obtained by the melting to obtain a metal powder". Besides, methods which have been specifically proposed with regard to this conventional method are a "plasma rotating electrode method" and a "gas atomizing method" (Patent Literature 1).

According to the plasma rotating electrode method, a base material (ingot) of a TiAl intermetallic compound is first prepared as a starting material. Thereafter, by taking the base material as a rotating electrode and directly irradiating the front end portion of the rotating electrode with plasma, droplets which are melted front end portion of the base material and have the chemical composition of the TiAl intermetallic compound are scattered. Thereafter, these scattered droplets are solidified to obtain a TiAl intermetallic compound powder.

In addition, according to the gas atomizing method, molten metal having the chemical composition of a TiAl intermetallic compound is prepared as a starting material. Thereafter, droplets are scattered and solidified by applying a high-pressure jet of gas to the fine stream of the molten metal to obtain a TiAl intermetallic compound powder.

In the case of the plasma rotating electrode method, it is necessary to prepare an ingot as a columnar electrode in advance, and the cost increases since the number of manufacturing steps increases. In addition, in the case of the plasma rotating electrode method, it is not easy to produce a fine powder having a particle diameter of 100 µm or less.

Besides, in the case of the gas atomizing method, the molten metal is formed into droplets and solidified while blowing an inert gas (cooling gas) such as argon, and thus the gas is entrapped inside the powder and a large number of pores are likely to be formed inside the powder after solidification.

In contrast, in the case of the present invention, first, the starting material is "cutting chips" of a TiAl intermetallic compound. In other words, if the starting material is cutting chips, it is easy to adjust the size to the size (volume) appropriate for the intended TiAl intermetallic compound powder from the beginning, thus it is not necessary to divide the material into a predetermined powder size by "blowing high-pressure gas" in a molten state as in the gas atomizing method, and it is possible to eliminate a factor by which pores are formed inside the TiAl intermetallic compound powder. In addition, it is also easy to adjust the particle size of the TiAl intermetallic compound powder when cutting chips are used. The size of the cutting chips can be adjusted by appropriately performing pulverization, classification, and the like. In this case, it is preferable to adjust the size (length) to, for example, 500 µm or less in consideration of the treatment capacity and the like at the time of the spheroidizing treatment described later. The size is preferably 400 µm or less, more preferably 300 µm or less, and still more preferably 200 µm or less. In addition, the size is preferably 30 µm or more, more preferably 40 µm or more, and still more preferably 50 µm or more.

Besides, the TiAl intermetallic compound is a material exhibiting poor ductility, and thus cutting chips generated when this material is cut are not linked with each other long but are likely to have a shape divided into particles. Hence, the above-described particle size adjustment is easy from this fact as well.

In addition, the cutting chips are also advantageous for a decrease in hydrogen content in the TiAl intermetallic compound powder because a large material is directly pulverized and the initial (starting material) hydrogen content does not increase as in the "pulverized pieces" obtained by combining hydrogen embrittlement and pulverization of the material. Besides, a TiAl intermetallic compound powder having a hydrogen content of less than 0.1 mass% can be easily obtained accordingly.

Moreover, in consideration that athermal plasma flame is utilized in the spheroidizing treatment described later, a larger size of the cutting chips is more advantageous from the viewpoint of being able to decrease excessive volatilization amount of Al which is a main component of a TiAl intermetallic compound. The reason is considered to be that when the cutting pieces pass through the thermal plasma flame, the Al component having a low melting point is likely to evaporate and small cutting chips are easily affected by this. Hence, excessive volatilization of Al from the cutting chips during the spheroidizing treatment can be suppressed by setting the size (length) of the cutting chips to preferably 70 µm or more, more preferably 80 µm or more, and still more preferably 90 µm or more. This makes it possible to suppress the change of components from those of the starting material. In addition, it is also possible to suppress a difference in Al concentration that may occur between the individual TiAl intermetallic compound powders produced.

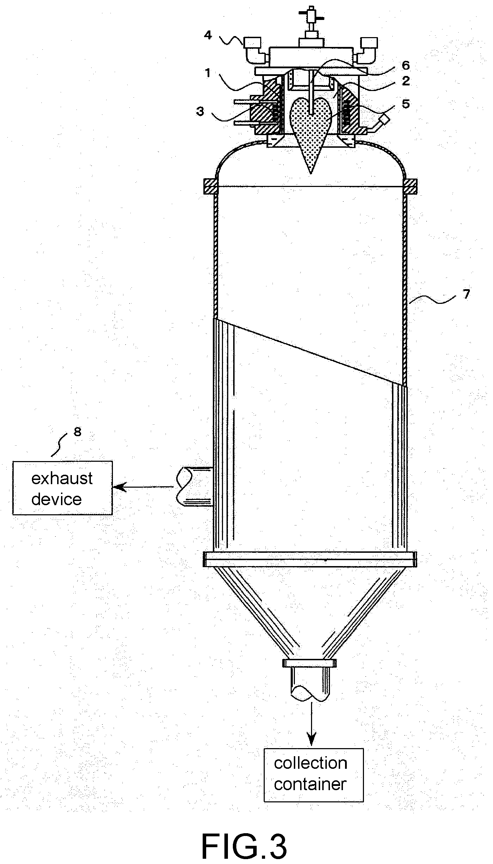

Besides, in the case of the present invention, a TiAl intermetallic compound powder can be obtained by subjecting the cutting chips to a "spheroidizing treatment" in which the cutting chips are passed through a thermal plasma flame. The spheroidizing treatment is a method capable of fabricating a powder having a high sphericity (for example, a powder of which the area circularity attained by image analysis of a secondary projection image is 0.9 or more), in which a starting material such as fragmented metal passes through a thermal plasma flame at a high temperature, the fragments passing through the region of the thermal plasma flame are melted and spheroidized by surface tension, and the spheroidized fragments (droplets) are solidified and collected after leaving the region of the thermal plasma flame. Besides, in the TiAl intermetallic compound powder obtained, the area circularity in the secondary projection image is 0.9 or more for 90% or more of the entire number of powders. The area circularity is preferably 0.95 or more. With regard to the "90% or more of the entire number of powders", the area circularity of approximately 10,000 TiAl intermetallic compound powders can be measured. When the number of the measured TiAl intermetallic compound powders is 10,000 or more, the numerical value of the content ratio of the area circularity as a whole is stable. The above spheroidizing treatment can be performed using, for example, the thermal plasma treatment apparatus of FIG. 3 (the structure of the thermal plasma treatment apparatus of FIG. 3 will be described in examples).

Moreover, the area circularity in a secondary projection image can be measured for TiAl intermetallic compound powders having an equivalent circle diameter of 1 µm or more in the secondary projection image.

In the case of the spheroidizing treatment, when the TiAl intermetallic compound is in a droplet state in which gas is likely to be entrapped (that is, when passing through a thermal plasma flame), the droplets hardly have an opportunity to come into contact with a large amount of gas because the amount of gas existing in the vicinity of the droplets is small, and it is possible to diminish the factor by which pores are formed inside the TiAl intermetallic compound powder. Besides, the fact that the amount of gas existing in the vicinity of droplets is small when the TiAl intermetallic compound is in a droplet state means that the amount of a reactant which can react with the droplets is also small. Hence, this makes it possible to maintain the cleanliness of the powder after being solidified, and thus the spheroidizing treatment is a suitable method for treating a TiAl intermetallic compound which is an active metal. Besides, it is thus possible to produce a fine TiAl intermetallic compound powder having a particle diameter of, for example, 100 µm or less at low cost.

At this time, the power of the thermal plasma flame during operation is preferably set to 10 kW or more. The spheroidization is easily promoted by increasing the power of the thermal plasma flame. The power is preferably 12 kW or more.

On the other hand, the upper limit of the power of the thermal plasma flame during operation is not particularly limited. However, the upper limit can be set to, for example, 250 kW or less. In addition, the upper limit can be set to 200 kW or less, 150 kW or less, or 100 kW or less. Furthermore, the upper limit can be set to 50 kW or less, 40 kW or less, or 30 kW or less. Besides, it is possible to decrease excessive volatilization amount of Al which is a main component of a TiAl intermetallic compound by lowering the power of the thermal plasma flame. The power of the thermal plasma flame is preferably 20 kW or less, more preferably 17 kW or less, and still more preferably 14 kW or less. This makes it possible to suppress the change of components from those of the starting material. In addition, it is also possible to suppress a difference in Al concentration that may occur between the individual TiAl intermetallic compound powders produced.

In addition, it is preferable that the thermal plasma flame is a "radio frequency (RF) plasma flame". It is possible to form a high-temperature portion at about 5000 to 10,000 K by using a RF plasma flame as the thermal plasma flame. Besides, the cutting chips passing through the thermal plasma flame is exposed to a high temperature accordingly and the surface and inside of the cutting chips are instantaneously melted and spheroidized by surface tension. Therefore, it is suitable for improving the sphericity of the TiAl intermetallic compound powder after being solidified and for further decreasing pores inside the powder.

It is preferable to use an inert gas such as argon exhibiting low reactivity as the "operating gas" when generating thermal plasma. The inert gas is not a mixed gas but a gas composed of an inert gas except for impurities. It is also possible to use hydrogen as the operating gas. However, in this case, the hydrogen content in the TiAl intermetallic compound powder after being solidified may increase. Besides, in a case that it is desired to obtain a TiAl intermetallic compound powder having a regulated hydrogen content, a dehydrogenation treatment is required in which the TiAl intermetallic compound powder after being solidified is heated in a reduced pressure atmosphere or in a vacuum. Hence, it is preferable that the operating gas is an inert gas. This makes it possible to lower the hydrogen content of the TiAl intermetallic compound powder to, for example, 0.002 mass% or less or 0.001 mass% or less.

These operating gases can also be utilized as carrier gases used to supply cutting chips to the region of the thermal plasma flame.

(2) In the TiAl intermetallic compound powder of the present invention, the cross section of the TiAl intermetallic compound powder has a porosity of 0 to 0.4 area%.

When powders of a TiAl intermetallic compound are molded by various powder metallurgy methods or layer molding methods, if the pores inside the powder are decreased in advance, the pores inside the molded article can also be decreased, and thus it is effective in improving the strength of molded article. Specifically, the powder is a TiAl intermetallic compound powder in which the ratio of the area of the pore portion to the cross-sectional area of the powder (namely, the porosity in the cross section of the powder) is "0 to 0.4 area%". The porosity is preferably 0.3 area% or less, more preferably 0.2 area% or less, still more preferably 0.1 area% or less. Besides, these porosities can be achieved by the above method for producing a TiAl intermetallic compound powder of the present invention.

Moreover, the cross section of the TiAl intermetallic compound powder to be subjected to the measurement of porosity is ideally a cross section divided at the center location of the powder (namely, a cross section of which the diameter is the particle diameter). However, it is not realistic to accurately expose such a cross section for individual powders. In the present invention, an aggregate of TiAl intermetallic compound powders is first embedded in a resin so that the plurality of powders are arranged in a random state and a certain thickness can be secured according to the general procedure for fabricating a sample for microscopic observation. Next, one surface of this resin in which the plurality of powders are embedded is polished. Thereafter, the porosity in the cross section of the plurality of powders exposed on this polished surface may be measured.

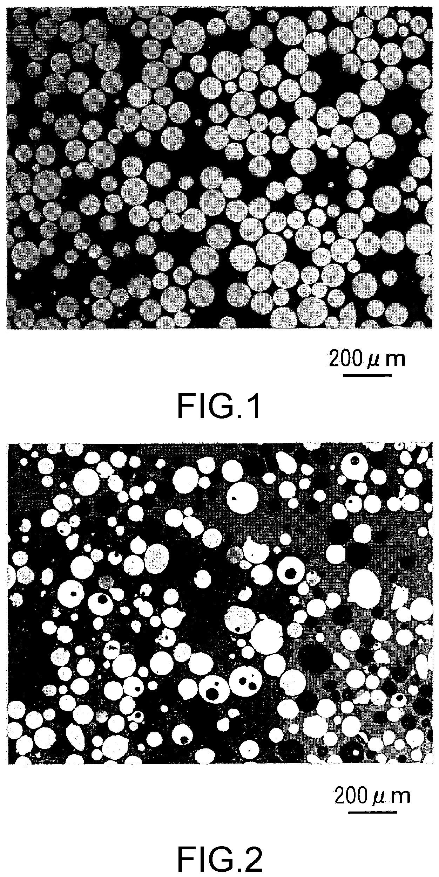

FIG. 1 and FIG. 2 are optical micrographs (magnification: 100-fold) which illustrate an example of cross sections of TiAl intermetallic compound powders of an example of the present invention and a comparative example, respectively. In these micrographs, white circular ones are the cross sections of TiAl intermetallic compound powders. Besides, those in which black is observed inside the white circular ones are pores. Moreover, the black circular ones in contrast to the white circular ones are the traces of TiAl intermetallic compound powders detached from the resin during polishing. Besides, the porosity in the cross section of the TiAl intermetallic compound powder can be determined by subjecting this micrograph to image processing, and the like. As the porosity to be determined, the porosity of approximately 500 TiAl intermetallic compound powders including the TiAl intermetallic compound powders in which the cross sections do not have pores is measured and taken as the porosity on the whole (average porosity). When the number of TiAl intermetallic compound powders in which the porosity is measured is 500 or more, the numerical value of the porosity on the whole is stable.

The chemical composition of the TiAl intermetallic compound according to the present invention can be, for example, a basic chemical composition of Al: 10% to 80% by a mass percentage and the rest Ti (containing impurities). Besides, in this chemical composition, one or two elemental species of Nb: 20.0% or less and Cr: 20.0% or less can be further contained as long as the powder maintains the form of a TiAl intermetallic compound. Besides, it is preferable that the sum of these elemental species is 20.0% or less.

The content of Nb is preferably 0.1% or more, more preferably 1.0% or more, still more preferably 2.0% or more, yet still more preferably 3.0% or more, and particularly preferably 4.0% or more. In addition, the content of Nb is preferably 16.0% or less, more preferably 13.0% or less, still more preferably 10.0% or less, and yet still more preferably 6.0% or less.

Besides, the content of Cr is preferably 0.1% or more, more preferably 0.5% or more, still more preferably 1.0% or more, yet still more preferably 1.5% or more, and particularly preferably 2.0% or more. In addition, the content of Cr is preferably 16.0% or less, more preferably 13.0% or less, still more preferably 10.0% or less, yet still more preferably 6.0% or less, and particularly preferably 3.0% or less.

Besides, in addition to Nb and Cr, one or two or more elemental species of V, Ta, Mn, B, Si, C, W, and Y may be contained as impurities or each of these elemental species may be contained at 20.0% or less as long as the powder maintains the form of a TiAl intermetallic compound. The content of each of these elemental species can be preferably set to 0.1% or more. In addition, the sum of the contents of these elemental species is preferably 20.0% or less or 0.1% or more.

The chemical composition described above can be attained by sampling 0.1 g or more of the TiAl intermetallic compound powder and subjecting the powder to the measurement.

The particle diameter of the TiAl intermetallic compound powder of the present invention can be set to, for example, 1 to 250 µm as the 50% particle diameter (D50) in the volume-based cumulative particle size distribution. Furthermore, the particle diameter according to D50 can be set to 150 µm or less. Besides, the TiAl intermetallic compound powder can be a fine TiAl intermetallic compound powder of which the particle diameter according to D50 is 100 µm or less or 50 µm or less. Moreover, the lower limit of the particle diameter according to D50 can also be set to 5 µm from the viewpoint of securing the fluidity of the TiAl intermetallic compound powder. Besides, the lower limit can also be set to 10 µm. The TiAl intermetallic compound powder of the present invention is suitable as a raw material powder used for fabricating a molded article by various powder metallurgy methods or layer molding methods.

### Example 1

FIG. 3 is a structural diagram illustrating an example of a RF thermal plasma treatment apparatus. This RF thermal plasma treatment apparatus has a cylindrical plasma generation space with a diameter of 50 mm. Besides, the thermal plasma generation unit is constituted by an inductively coupled RF plasma torch. This configuration includes a plasma generation space 2 partitioned by a cooling wall 1, a radio frequency coil 3 arranged on the outer side of the plasma generation space 2, and an operating gas supply unit 4 for supplying an operating gas from one axial direction of the radio frequency coil 3. The RF thermal plasma flame is generated by supplying an operating gas from the supply unit 4 and applying a voltage to the radio frequency coil 3.

In addition, this thermal plasma treatment apparatus is equipped with a powder supply nozzle 6 for supplying fragments of a starting material and a carrier gas into a thermal plasma flame 5 generated on the inner side of the radio frequency coil 3, a chamber 7 arranged on the downstream side of the thermal plasma flame 5, and an exhaust device 8 for exhausting air from the chamber 7.

Cutting chips of a TiAl intermetallic compound were subjected to a spheroidizing treatment using this RF thermal plasma treatment apparatus to fabricate TiAl intermetallic compound powders (particle diameter: about 45 to 150 µm). The measurement of D50 of each powder was performed for about 3 g of TiAl intermetallic compound powders using a laser diffraction scattering type particle distribution measurement apparatus "MT3300" manufactured by Microtrac Bell Co., Ltd. In addition, among the fabricated TiAl intermetallic compound powders, the area circularity in the secondary projection image was 0.95 or more for 90% or more of the entire number of powders. At this time, the measurement of the area circularity in the secondary projection image was performed for 20,000 TiAl intermetallic compound powders using a particle image analysis system "Morphologi G3" manufactured by Malvern Instruments Ltd. The cutting chips were prepared by cutting an ingot having a chemical composition shown in Table 2 as a starting material. The cutting chips had a needle shape, and the lengths thereof were adjusted to about 45 to 200 µm by performing pulverization and classification. The plasma operating conditions at the time of the spheroidizing treatment were set as shown in Table 1. Moreover, the internal pressure of the chamber 7 was set to a negative pressure of -0.02 MPa with respect to the atmospheric pressure.

**[Table 1]**

| Operating condition | Plasma power | Operating gas | Carrier gas |
|---|---|---|---|
| 1 | 25 kW | Ar gas: 86 L/min (nor) + H₂ gas: 1.5 L/min (nor) | Ar gas: 4 L/min (nor) |
| 2 | 15 kW | Ar gas: 86 L/min (nor) + H₂ gas: 0.3 L/min (nor) | |
| 3 | 15 kW | Ar gas: 86 L/min (nor) | |

Meanwhile, the ingot was melted and the molten metal was subjected to a gas atomizing method using Ar as the injection gas and the cooling gas to fabricate gas atomized powders of a TiAl intermetallic compound. Thereafter, these gas atomized powders were classified so as to have a particle diameter of about 45 to 150 µm and taken as TiAl intermetallic compound powders (the particle diameter according to D50 is shown in Table 2). Among the TiAl intermetallic compound powders after this classification, the number of powders of which the area circularity in the secondary projection image was less than 0.95 exceeded 20% of the entire number of powders. At this time, the measurement of the area circularity in the secondary projection image was performed for 20,000 TiAl intermetallic compound powders using an apparatus similar to that described above.

Besides, for each of the TiAl intermetallic compound powders fabricated by the spheroidizing treatment and the gas atomizing method described above, the porosity observed on the cross section was measured according to the procedure described above. In addition, the chemical composition was also analyzed. The analysis of chemical composition was performed in accordance with the analysis method for respectivce elemental species on a sample of 0.1 g or more of the TiAl intermetallic compound powders. With regard to the metal elements, the contents of Al, Nb, and Cr were analyzed by ICP emission spectroscopy for 0.25 g of TiAl intermetallic compound powders. With regard to the gas elements, for 0.3 g of TiAl intermetallic compound powders, the oxygen content was analyzed by an inert gas dissolving-infrared absorbing method and the hydrogen content was analyzed by an inert gas dissolving-thermal conductivity method (the same applies to the cutting chips). The results are shown in Table 2 together with the cheimcal composition of the starting material (or cutting chips) and the particle diameter according to D50.

**[Table 2]**

| | Operating condition | D50 (µm) | Porosity (area%) | Cheimcal composition (mass%) | | | | | | Remarks |
|---|---|---|---|---|---|---|---|---|---|---|
| | | | | Al | Nb | Cr | H | O | Ti | |
| Starting material | - | - | - | 33.15 | 4.84 | 2.60 | 0.0001 | 0.02* | Bal. | |
| Powder 1 | 1 | 94 | 0.06 | 29.60 | 5.02 | 2.36 | 0.0116 | 0.0676 | Bal. | Examples of present invention |
| Powder 2 | 2 | 96 | 0.10 | 32.54 | 4.82 | 2.49 | 0.0023 | 0.0738 | Bal. | |
| Powder 3 | 3 | 102 | 0.03 | 32.12 | 4.83 | 2.50 | 0.0002 | 0.0726 | Bal. | |
| Powder 4 | Gas atomizing method | 66 | 2.2 | 33.50 | 4.79 | 2.61 | 0.0006 | 0.0616 | Bal. | Comparative example |

| | | | | | | | | | | |
|---|---|---|---|---|---|---|---|---|---|---|
| * Oxygen content in cutting chips was 0.083%. | | | | | | | | | | |

From the results in Table 2, the porosity of the powder 4 of TiAl intermetallic compound fabricated by the gas atomizing method was 2.2 area%. In contrast, the porosity of the powders 1 to 3 of TiAl intermetallic compound according to examples of the present invention fabricated by the spheroidizing treatment was kept to as low as 0.4 area% or less.

Besides, when the chemical compositions of the powders 1 to 3 according to examples of the present invention were evaluated, the chemical compositions (Al content) of the powders 2 and 3 fabricated at a low maximum output at the time of spheroidizing treatment were slightly changed from the chemical composition of the starting materials. In addition, the powder 3 fabricated without using hydrogen as an operating gas at the time of spheroidizing treatment had a low hydrogen content.

### Example 2

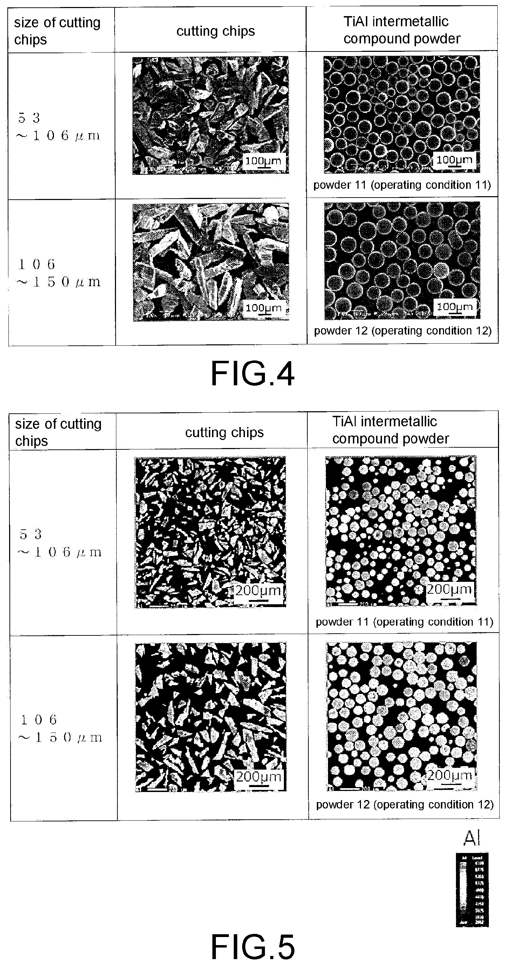

Cutting chips of a TiAl intermetallic compound were subjected to a spheroidizing treatment under operating conditions 11 and 12 in Table 3 using the RF thermal plasma treatment apparatus of FIG. 3 to fabricate TiAl intermetallic compound powders. The cutting chips had a needle shape, and the lengths thereof were adjusted as shown in Table 3. The appearance of these cutting chips is illustrated in the scanning electron micrograph (magnification: 100-fold) of FIG. 4. Moreover, the plasma operating conditions at the time of spheroidizing treatment were set as follows: the operating gas was Ar gas: 86 L/min (nor) and the carrier gas was Ar gas: 4 L/min (nor). The internal pressure of the chamber was set to a negative pressure of -0.02 MPa with respect to the atmospheric pressure.

Meanwhile, gas atomized powders of a TiAl intermetallic compound different from that of Example 1 was also prepared. The gas atomized powder is classified so that the particle diameter is about 45 to 150 µm.

**[Table 3]**

| Operating condition | Length of cutting chips | Plasma power |
|---|---|---|
| 11 | 53 to 106 µm | 15 kW |
| 12 | 106 to 150 µm | |

The particle diameter according to D50 and the area circularity in the secondary projection image of the TiAl intermetallic compound powders fabricated by the spheroidizing treatment and the gas atomizing method described above were measured. With regard to the measurement, the particle diameter according to D50 was measured according to a procedure similar to that in Example 1 and the area circularity was measured for 10,000 TiAl intermetallic compound powders. Besides, with regard to the area circularity, as a result of the measurement, the area circularity was 0.95 or more for 90% or more of the entire number of powders among the individual TiAl intermetallic compound powders fabricated by the spheroidizing treatment under any operating condition. The appearance shape of each TiAl intermetallic compound powder is illustrated in the scanning electron micrograph (magnification: 100-fold) of FIG. 4.

Moreover, among the individual TiAl intermetallic compound powders fabricated by the gas atomizing method, the number of powders of which the area circularity was less than 0.95 exceeded 20% of the entire number of powders.

The porosity observed on the cross section of each of the TiAl intermetallic compound powders was measured according to the procedure described above. In addition, the chemical composition was also analyzed. The analysis of the chemical composition was performed according to a procedure similar to that in Example 1 (the same applies to the cutting chips). The results are shown in Table 4 together with the chemical composition of cutting chips and the particle diameter according to D50.

**[Table 4]**

| | Operating condition | D50 (µm) | Porosity (area%) | Chemical composition (mass%) | | | | | | Remarks |
|---|---|---|---|---|---|---|---|---|---|---|
| | | | | A1 | Nb | Cr | H | O | Ti | |
| Cutting chips | | - | - | 32.66 | 4.71 | 2.48 | 0.0010 | 0.0666 | Bal. | |
| Powder 11 | 11 | 90 | 0.01 | 32.12 | 4.83 | 2.50 | 0.0002 | 0.0726 | Bal. | Examples of present invention |
| Powder 12 | 12 | 121 | 0.02 | 32.53 | 4.75 | 2.47 | 0.0001 | 0.0680 | Bal. | |
| Powder 13 | Gas atomizing method | 70 | 0.7 | 33.50 | 4.79 | 2.61 | 0.0006 | 0.0616 | Bal. | Comparative example |

From the results in Table 4, the porosity of the TiAl intermetallic compound powders according to the examples of the present invention fabricated by the spheroidizing treatment was kept to as low as 0.4 area% or less. Besides, when the chemical compositions of the powders 11 and 12 according to the examples of the present invention were evaluated, the Al content in the powder 12 fabricated by treating large-size cutting chips was slightly changed from the chemical composition of the cutting chips.

Besides, with regard to the difference in Al concentration that may occur between the individual TiAl intermetallic compound powders produced, the concentration difference in the powder 12 fabricated by treating large-size cutting chips was suppressed. FIG. 5 is an element mapping diagram (magnification: 100-fold) attained when the Al concentrations in the cross sections of the TiAl intermetallic compound powders 11 and 12 were analyzed using EPMA together with the Al concentrations of the cutting chips. For this analysis, an electron probe microanalyzer "JXA-8900R" manufactured by JEOL Ltd. was used. Moreover, in the results of the cutting chips, the cutting chips which are displayed to be smaller than the actual size are cutting chips of which the length direction faces the analysis surface (paper surface side).

In this element mapping diagram displayed in black and white (actually, displayed in colors according to the concentration index of Al component "by color-coding" illustrated in the drawing), the powder of which the color tone is roughly lighter than the color tone of the cutting chips is a powder having a low Al concentration (namely, a powder from which the Al component has volatilized during the spheroidizing treatment). Besides, it can be seen that a large number of such powders having a low Al concentration are observed in powders having a small particle diameter.

### Example 3

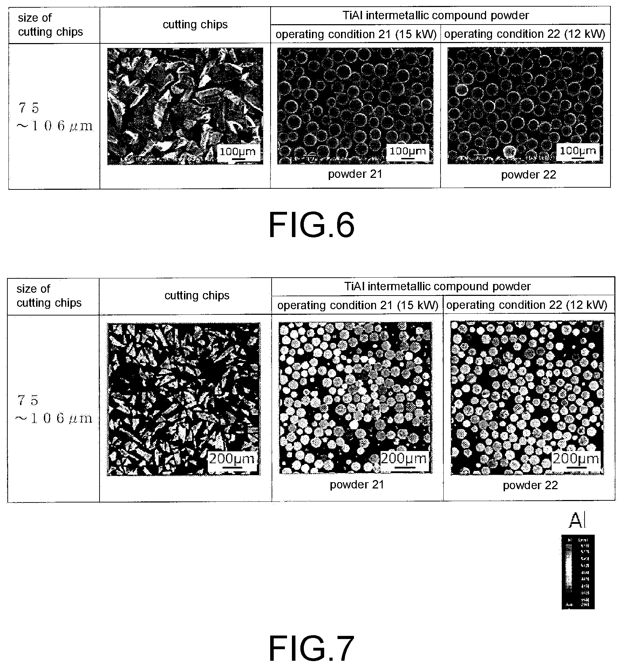

Cutting chips of a TiAl intermetallic compound were subjected to the spheroidizing treatment under operating conditions 21 and 22 in Table 5 using the RF thermal plasma treatment apparatus of FIG. 3 to fabricate TiAl intermetallic compound powders. The cutting chips had a needle shape, and the lengths thereof were adjusted as shown in Table 5. The appearance of these cutting chips is illustrated in the scanning electron micrograph (magnification: 100-fold) of FIG. 6. Moreover, the plasma operating conditions at the time of the spheroidizing treatment were set as follows: the operating gas was Ar gas: 86 L/min (nor) and the carrier gas was Ar gas: 4 L/min (nor). The internal pressure of the chamber was set to a negative pressure of -0.02 MPa with respect to the atmospheric pressure.

**[Table 5]**

| Operating condition | Length of cutting chips | plasma Power |
|---|---|---|
| 21 | 75 to 106 µm | 15 kW |
| 22 | | 12 kW |

The particle diameter according to D50 and the area circularity of the secondary projection image of the TiAl intermetallic compound powders fabricated by the spheroidizing treatment described above were measured. With regard to the measurement, the particle diameter according to D50 was measured according to a procedure similar to that in Example 1 and the area circularity was measured for 10,000 TiAl intermetallic compound powders. Besides, with regard to the area circularity, as a result of the measurement, the area circularity was 0.95 or more for 90% or more of the entire number of powders among the individual TiAl intermetallic compound powders fabricated by the spheroidizing treatment under any operating condition. The appearance shape of each TiAl intermetallic compound powder is illustrated in the scanning electron micrograph (magnification: 100-fold) of FIG. 6. It can be seen from FIG. 6 that the powder fabricated at a high maximum output at the time of the spheroidizing treatment has a high sphericity.

The porosity observed on the cross section of each of the TiAl intermetallic compound powders was measured according to the procedure described above. In addition, the chemical composition was also analyzed. The analysis of the chemical composition was performed according to a procedure similar to that in Example 1 (the same applies to the cutting chips). The results are shown in Table 6 together with the chemical composition of the cutting chips and the particle diameter according to D50.

**[Table 6]**

| | Operating condition | D50 (µm) | Porosity (area%) | Chemical composition (mass%) | | | | | | Remarks |
|---|---|---|---|---|---|---|---|---|---|---|
| | | | | Al | Nb | Cr | H | 0 | Ti | |
| Cutting chips | - | - | - | 31.67 | 4.72 | 2.49 | 0.0019 | 0.0820 | Bal. | |
| Powder 21 | 21 | 94 | 0.05 | 31.59 | 4.81 | 2.49 | 0.0009 | 0.0840 | Bal. | Examples of present invention |
| Powder 22 | 22 | 93 | 0.02 | 31.85 | 4.80 | 2.51 | 0.0011 | 0.0780 | Bal. | |

From the results in Table 6, the porosity of the TiAl intermetallic compound powders according to the examples of the present invention fabricated by the spheroidizing treatment was kept to as low as 0.4 area% or less. Besides, when the chemical compositions of the powders 21 and 22 according to the examples of the present invention were evaluated, the Al content in the powder 22 fabricated at a low maximum output at the time of the spheroidizing treatment was slightly changed from the chemical composition of the cutting chips, and the volatilization of Al is also suppressed.

Besides, with regard to the difference in Al concentration that may occur between the individual TiAl intermetallic compound powders produced, the concentration difference in the powder 22 at a low maximum output at the time of the spheroidizing treatment was also suppressed. FIG. 7 is an element mapping diagram (magnification: 100-fold) attained when the Al concentrations in the cross sections of the TiAl intermetallic compound powders 21 and 22 were analyzed using EPMA similar to that in FIG. 5 together with the Al concentrations of the cutting chips.

### [Reference Signs List]

- 1: cooling wall
- 2: plasma generation space
- 3: radio frequency coil
- 4: operating gas supply unit
- 5: thermal plasma flame
- 6: powder supply nozzle
- 7: chamber
- 8: exhaust device

## Claims

1. A method for producing a TiAl intermetallic compound powder in which a cutting chips of a TiAl intermetallic compound is passed through a thermal plasma flame for a spheroidizing treatment.

2. The method for producing a TiAl intermetallic compound powder according to claim 1, wherein a size of the cutting chips is 500 µm or less.

3. The method for producing a TiAl intermetallic compound powder according to claim 1 or 2, wherein the power of the thermal plasma flame is 10 to 250 kW.

4. The method for producing a TiAl intermetallic compound powder according to any one of claims 1 to 3, wherein the thermal plasma flame is a radio frequency plasma flame.

5. The method for producing a TiAl intermetallic compound powder according to any one of claims 1 to 4, wherein an operating gas of the thermal plasma flame is an inert gas.

6. The method for producing a TiAl intermetallic compound powder according to any one of claims 1 to 5, wherein a carrier gas used to supply the cutting chips to a region of the thermal plasma flame is an inert gas.

7. A TiAl intermetallic compound powder of which a cross section has a porosity of 0 to 0.4 area%.

8. The TiAl intermetallic compound powder according to claim 7, wherein an area circularity in a secondary projection image is 0.9 or more for 90% or more of an entire number of powders.

9. The TiAl intermetallic compound powder according to claim 7 or 8, wherein a particle diameter is 1 to 250 µm as a 50% particle diameter (D50) in volume-based cumulative particle size distribution.

10. The TiAl intermetallic compound powder according to any one of claims 7 to 9, wherein a chemical composition has 10% to 80% of Al by a mass percentage and the rest is Ti and impurities.

11. The TiAl intermetallic compound powder according to claim 10, wherein the chemical composition further contains one or two elemental species of Nb: 20.0% or less and Cr: 20.0% or less by a mass percentage.

12. The TiAl intermetallic compound powder according to claim 10 or 11, wherein the chemical composition further contains one or two or more elemental species of V, Ta, Mn, B, Si, C, W, and Y at 20.0% or less for each by a mass percentage.

13. The TiAl intermetallic compound powder according to any one of claims 7 to 12, wherein the TiAl intermetallic compound powder is used in a powder metallurgy method or a layer molding method.
